# EUROPÄISCHE PATENTSCHRIFT

(11) **EP 4 594 739 B1**
(45) Veröffentlichungstag und Bekanntmachung des Hinweises auf die Patenterteilung: **28.10.2026**
(21) Anmeldenummer: 23777187.8
(22) Anmeldetag: 22.09.2023
(51) Int. Cl.: G01N 21/93, H04N 23/56, G01N 21/88

(54) **VERFAHREN UND VORRICHTUNG ZUR AUFNAHME MEHRERER ABBILDUNGEN EINES OBJEKTS MIT UNTERSCHIEDLICHEN BELEUCHTUNGSKONFIGURATIONEN**
METHOD AND DEVICE FOR RECORDING A PLURALITY OF IMAGES OF AN OBJECT USING DIFFERENT LIGHTING CONFIGURATIONS
PROCÉDÉ ET DISPOSITIF D'ENREGISTREMENT D'UNE PLURALITÉ D'IMAGES D'UN OBJET À L'AIDE DE DIFFÉRENTES CONFIGURATIONS D'ÉCLAIRAGE

(30) Priorität: 30.09.2022 DE 102022125409
(43) Veröffentlichungstag der Anmeldung: 06.08.2025
(73) Patentinhaber: Cruse Technologies GmbH, 53343 Wachtberg (DE)
(72) Erfinder: DEGENER, Patrick, 53123 Bonn (DE); REETZ, Christof, 67259 Beindersheim (DE)
(74) Vertreter: Habermann Intellectual Property Partnerschaft von Patentanwälten mbB
(86) Internationale Anmeldenummer: PCT/EP2023/076232
(87) Internationale Veröffentlichungsnummer: WO 2024/068468

(56) Entgegenhaltungen:
- DE-A1- 102012 001 868
- US-A1- 2019 154 578

## Beschreibung

Die Erfindung betrifft ein Verfahren zur Aufnahme mehrerer Abbildung eines Objekts mit unterschiedlichen Beleuchtungskonfigurationen, wobei das Objekt und eine Zeilenkamera relativ zueinander entlang einer Aufnahmetrajektorie verlagert werden, wobei während eines Aufnahmeschritts mit einer Beleuchtungseinrichtung in aufeinanderfolgenden Aufnahmetakten aufeinanderfolgende Wiederholungen einer Beleuchtungssequenz mit unterschiedlichen Beleuchtungskonfigurationen vorgegeben werden, wobei mit der Zeilenkamera in jedem Aufnahmetakt jeweils eine Abbildungszeile eines Objektstreifens aufgenommen wird, und wobei der Aufnahmetakt in Abhängigkeit von einer relativen Verlagerungsgeschwindigkeit entlang der Aufnahmetrajektorie und der Anzahl unterschiedlicher Beleuchtungskonfigurationen in der Beleuchtungssequenz ausreichend kurz ist, sodass in einem Abbildungserzeugungsschritt für jede einzelne Beleuchtungskonfiguration der Beleuchtungssequenz die mit dieser Beleuchtungskonfiguration nacheinander aufgenommenen Abbildungszeilen der Objektstreifen zu einer lückenlosen Abbildung des Objekts mit der betreffenden Beleuchtungskonfiguration zusammengesetzt werden können. Die Erfindung betrifft auch eine Vorrichtung zur Aufnahme mehrerer Abbildungen eines Objekts mit unterschiedlichen Beleuchtungskonfigurationen, wobei die Vorrichtung eine Aufnahmeeinrichtung für das Objekt und eine Zeilenkamera aufweist, mit welcher in einem Aufnahmetakt Abbildungszeilen eines Objektstreifens aufgenommen werden können, wobei die Aufnahmeeinrichtung und die Zeilenkamera relativ zueinander entlang einer Aufnahmetrajektorie verlagerbar sind, sodass aus einer Anzahl von Abbildungszeilen einzelner Objektstreifen eine lückenlose Abbildung des Objekts zusammengesetzt werden kann, und wobei die Vorrichtung eine Beleuchtungseinrichtung aufweist, mit welcher mindestens zwei verschiedene Beleuchtungskonfigurationen vorgebbar sind, mit denen das Objekt beleuchtbar ist, während mit der Zeilenkamera eine Abbildungszeile aufgenommen wird.

Insbesondere bei großformatigen Objekten oder bei einer kontinuierlichen Aufnahme von Endlosmaterialien, wie sie beispielsweise in Produktionsprozessen verwendet und der Produktion zugeführt oder als Produktionsergebnis erzeugt werden, eignen sich Zeilenkameras, die eine Anzahl von lichtempfindlichen Sensorpixeln aufweisen, die zeilenförmig angeordnet sind und mit denen sich mit jeder Aufnahme eine Abbildungszeile eines streifenförmigen Objektbereichs aufnehmen lässt. Durch die Aufnahme vieler Abbildungszeilen während einer Relativbewegung der Zeilenkamera relativ zu dem Objekt können eine entsprechende Anzahl von Objektstreifen abgebildet werden und durch einen geeigneten Verlauf der Aufnahmetrajektorie eine lückenlose Abbildung des Objekts aus den einzelnen Abbildungszeilen beziehungsweise aus den einzelnen Abbildungen der Objektstreifen zusammengesetzt werden.

Die räumliche Auflösung der Abbildungszeile der Zeilenkamera ist in Richtung der zeilenförmigen Anordnung der Sensorpixel durch die Abmessungen der einzelnen Sensorpixel vorgegeben. In der Richtung der Aufnahmetrajektorie, die üblicherweise quer zu der Richtung der zeilenförmigen Anordnung der Sensorpixel verläuft, kann die räumliche Auflösung durch eine Relativverlagerung der Zeilenkamera und dem Objekt vorgegeben werden, wobei die räumliche Auflösung umso größer werden kann, je kleiner die Relativverlagerung zwischen zwei aufeinanderfolgenden Aufnahmen mit der Zeilenkamera ist. Bei vielen Zeilenkameras ist ein Aufnahmetakt fest eingestellt oder variabel einstellbar, mit welchem der zeitliche Abstand von zwei aufeinanderfolgenden Aufnahmen mit der Zeilenkamera vorgegeben wird. Der Aufnahmetakt beziehungsweise die Aufnahmezeilenfrequenz wird in der Praxis meistens so vorgegeben, dass die mit den Sensorpixeln aufgenommenen Abbildungsstreifen für jeden Sensorpixel eine quadratische Abbildungsfläche ergeben, sodass die räumliche Auflösung entsprechend den Abmessungen der Sensorpixel entlang der Zeile vorgegeben wird. Aus der Praxis sind Zeilenkameras mit mehreren hundert bis mehreren tausend zeilenförmig angeordneten Sensorpixeln bekannt, mit denen mehrere tausend Abbildungszeilen pro Sekunde aufgenommen werden können, sodass der Aufnahmetakt beispielsweise 10.000 Hz oder mehr betragen kann.

Aus der Praxis sind verschiedene Verfahren und Vorrichtung zur Aufnahme mehrerer Abbildungen eines Objekts mit unterschiedlichen Beleuchtungskonfigurationen bekannt. Durch die Beleuchtung des Objekts mit unterschiedlich farbigem Licht oder mit unterschiedlich intensivem Licht können verschiedene optische Eindrücke in den auf diese Weise erzeugten Abbildungen des Objekts erzeugt oder verstärkt werden. Durch eine Beleuchtung des Objekts aus unterschiedlichen Richtungen können unterschiedliche Schattenwürfe erzeugt werden. Durch eine geeignete Kombination von Beleuchtungskonfigurationen mit unterschiedlichen Beleuchtungsrichtungen kann im Rahmen einer anschließenden Auswertung der einzelnen Abbildungen mit den unterschiedlichen Beleuchtungskonfigurationen eine fotometrische Stereoanalyse durchgeführt und ein Höhenprofil für mit den Abbildungen abgebildete Oberflächen des Objekts ermittelt werden.

Zeilenkameras können vorteilhaft zur Inspektion von Oberflächen eines Objekts verwendet werden, wobei durch verschiedene Aufnahmen mit unterschiedlichen Beleuchtungskonfigurationen viele Informationen für die Inspektion der Oberflächen wie beispielsweise Farbe, Glanz und dreidimensionale Strukturierung ermittelt werden können. Entsprechende Verfahren und Vorrichtungen sind beispielsweise in DE 100 63 293 A1 oder in EP 1 742 041 A1 gezeigt und beschrieben. Zeilenkameras können auch zur Erzeugung von qualitativ hochwertigen und hochaufgelösten Abbildungen von großformatigen Objekten wie beispielsweise von Gemälden oder von dreidimensional strukturierten Oberflächen von Produktionsvorlagen verwendet werden. Ein Verfahren zur Aufnahme mehrerer Abbildungen eines Objekts mit unterschiedlichen Beleuchtungskonfigurationen ist beispielsweise in US 2019/154578 A1 beschrieben.

Um die Qualität der einzelnen Abbildungen mit den unterschiedlichen Beleuchtungskonfigurationen zu verbessern ist es bekannt, dass mit Hilfe von geeigneten Kalibrierungsverfahren eine für die Aufnahme der Abbildungen verwendete Kamera vorab kalibriert wird, um kamerabedingte Fehler bei der Erzeugung der Abbildungen zu reduzieren. Werden elektronische Kameras mit lichtempfindlichen Halbleitersensoren für die Aufnahme der Abbildungen verwendet, können mit geeigneten Kalibrierungsverfahren unerwünschte Einflüsse eines Dunkelstromrauschens oder von unterschiedlichen Lichtempfindlichkeiten der Halbleitersensoren reduziert werden. Kalibrierungsverfahren und für deren Durchführung erforderliche Vorrichtungen sind beispielsweise in DE 10 2016 104 917 A1 oder in DE 10 2016 111 714 A1 beschrieben.

Üblicherweise werden vor einer ersten Verwendung der Zeilenkamera die erforderlichen Kalibrierungsverfahren durchgeführt und entsprechende Korrekturen oder Korrekturfaktoren ermittelt, bevor anschließend mit der Zeilenkamera Abbildungszeilen von Objektstreifen aufgenommen werden. Es ist beispielsweise aus DE 10 2012 001868 A1 bekannt, bei einem Verfahren zur Aufnahme einer Abbildung eines Objekts mit einer Zeilenkamera Kalibrationsbeleuchtungskonfigurationen für einen Weißabgleich und eine Dunkelstromkorrektur vorzusehen. Es hat sich jedoch gezeigt, dass die verwendeten Korrekturen komplex sind und sich die Eigenschaften einer Zeilenkamera mit der Zeit ändern können, sodass in zeitlichen Abständen eine erneute Durchführung der Kalibrierungsverfahren vorteilhaft ist. Der hierfür erforderliche Aufwand ist jedoch insbesondere bei kontinuierlich durchgeführten Inspektionsverfahren während eines Produktionsprozesses groß, da der Produktionsprozess regelmäßig unterbrochen werden muss, während ein Kalibrierungsverfahren durchgeführt wird. Es wird auch bei der Aufnahme einzelner Abbildungen beispielsweise von großformatigen Gemälden oder Objektoberflächen als lästiger Aufwand empfunden, wenn vor jeder einzelnen Aufnahme oder in zeitlichen Abständen ein Kalibrierungsverfahren durchgeführt werden muss, um die gewünschte Qualität der Abbildungen zu erreichen.

Derartige Kalibrierungsverfahren stützen sich meistens auf die Annahme, dass etwaige Störungen sich über die Zeit nicht ändern. Unter dieser Annahme kann die Zeilenkamera zu einem bestimmten Zeitpunkt eingemessen und die einmal vorab berechnete Korrektur zu späteren Zeitpunkten angewendet werden. Allerdings trifft diese Annahme in der Praxis nur eingeschränkt zu. Sensoren können hier auch dynamischen Störungen beispielsweise durch elektromagnetische Einstrahlung unterliegen, die kurzfristiger Natur sind oder zeitlich variabel. Diese Störungen sind oft nur mit sehr hohem Aufwand und erheblichen Anforderungen an gleichbleibende Umgebungs- und Betriebsbedingungen sowie durch eine umfangreiche Abschirmung auszuschließen und verletzen die Annahme und Voraussetzung für solche Kalibrierungsmethoden.

Es wird deshalb als eine Aufgabe der vorliegenden Erfindung angesehen, ein Verfahren mit den eingangs beschriebenen Aspekten zur Aufnahme mehrerer Abbildungen eines Objekts mit unterschiedlichen Beleuchtungskonfigurationen so auszugestalten, dass mit geringem Aufwand eine über einen langen Zeitraum gute Kalibrierung der Zeilenkamera ermöglicht wird.

Diese Aufgabe wird erfindungsgemäß dadurch gelöst, dass mindestens eine Kalibrationsbeleuchtungskonfiguration innerhalb der Beleuchtungssequenz vorgegeben wird, mit welcher in einem Aufnahmetakt eine objektunabhängige Kalibrationsbildzeile aufgenommen wird, und dass die aufgenommene Kalibrationsbildzeile für eine Kalibration der einzelnen Abbildungszeilen innerhalb der betreffenden Beleuchtungssequenz verwendet wird. Für die meisten Anwendungsfälle bieten die handelsüblich erhältlichen Zeilenkameras bereits einen Aufnahmetakt an, der für die Aufnahme gewünschte räumliche Auflösung der Abbildungen des Objekts mehr als ausreicht, auch wenn eine Beleuchtungssequenz mit mehreren unterschiedlichen Beleuchtungskonfigurationen vorgegeben wird, sodass bei der relativen Verlagerung der Zeilenkamera und des Objekts gleichzeitig mehrere Abbildungen mit den unterschiedlichen Beleuchtungskonfigurationen aufgenommen werden. Durch die Aufnahme einer Kalibrationsbeleuchtungskonfiguration in die Beleuchtungssequenz verlangsamt sich die Erfassung einer Aufnahmesequenz während der Verlagerung entlang der Aufnahmetrajektorie nicht oder nicht übermäßig, sodass die Aufnahme der Kalibrationsbleuchtungskonfiguration als weitere Beleuchtungskonfiguration in die Beleuchtungssequenz nicht störend wahrgenommen wird. Auf diese Weise entfällt der Aufwand für eine gesondert durchzuführende Kalibration der Zeilenkamera entweder mit einer gesonderte Kalibrationsvorrichtung oder vor Beginn einer Aufnahmesequenz. Es ist nicht einmal eine zusätzliche relative Verlagerung der Zeilenkamera und des Objekts entlang der Aufnahmetrajektorie erforderlich.

Zudem wird es mit dem erfindungsgemäßen Verfahren ermöglicht, dass quasi kontinuierlich eine Kalibration der Zeilenkamera durchgeführt werden kann, sodass beispielsweise Umgebungseinflüsse oder eine Betriebstemperatur oder auch eine zeitliche Veränderung der Aufnahmecharakteristik einzelner Sensorpixel mit der ständig durchgeführten Kalibration erfasst und korrigiert werden können.

Bei der Durchführung einer Aufnahmesequenz werden die Zeilenkamera und das Objekt entlang der Aufnahmetrajektorie verlagert und mit der Zeilenkamera mit dem vorgegebenen Aufnahmetakt Abbildungszeilen aufgenommen. Die relative Verlagerung der Zeilenkamera relativ zu dem Objekt kann durch eine Verlagerung des Objekts relativ zu der ortsfest angeordneten Zeilenkamera bewirkt werden. Es ist ebenfalls möglich, dass das Objekt ortsfest angeordnet ist und die Zeilenkamera entlang der Aufnahmetrajektorie relativ zu dem Objekt verlagert wird. Weiterhin kann alternativ auch vorgesehen sein, dass sowohl die Zeilenkamera als auch das Objekt gleichzeitig verlagert werden, sodass die relative Verlagerung der Zeilenkamera relativ zu dem Objekt entlang der Aufnahmetrajektorie verläuft.

Während der Durchführung einer Aufnahmesequenz wird eine Beleuchtungseinrichtung so angesteuert, dass nacheinander die verschiedenen Beleuchtungskonfigurationen innerhalb einer Beleuchtungssequenz vorgegeben und eine entsprechende Anzahl von Abbildungszeilen mit jeweils einer vorgegebenen Beleuchtungskonfiguration aufgenommen wird. Sobald eine Beleuchtungssequenz abgearbeitet und eine entsprechende Anzahl von Abbildungszeilen aufgenommen wurde, wird die Beleuchtungssequenz wiederholt und erneut eine entsprechende Anzahl von Abbildungszeilen aufgenommen. Die relative Verlagerung der Zeilenkamera und des Objekts ist zweckmäßigerweise synchronisiert, was mit Hilfe eines geeigneten Inkrementgebers oder Encoders bewirkt werden kann, sodass keine räumliche Lücke oder Verzerrung der aus den einzelnen Abbildungszeilen beziehungsweise aus den einzelnen Abbildungen der Objektstreifen zusammengesetzten Abbildungen des Objekts entsteht. Die relative Verlagerung wird dabei so vorgegeben, dass zwei Abbildungszeilen von zwei aufeinanderfolgend durchgeführten Beleuchtungssequenzen, die jeweils mit derselben Beleuchtungskonfiguration aufgenommen wurden, zwei in Richtung der Aufnahmetrajektorie unmittelbar angrenzende oder überlappende Objektstreifen abbilden. Aus allen Abbildungszeilen, die mit derselben Beleuchtungskonfiguration durchgeführt werden, kann dann eine lückenlose Abbildung des Objekts mit der betreffenden Beleuchtungskonfiguration erzeugt werden. Während der Durchführung einer Aufnahmesequenz können auf diese Weise im Wesentlichen gleichzeitig mehrere Abbildungen des Objekts mit jeweils verschiedenen Beleuchtungskonfigurationen erzeugt werden. Zudem kann quasi kontinuierlich eine Kalibration der Zeilenkamera durchgeführt werden, sodass bei den einzelnen Abbildungszeilen die auf die Zeilenkamera zurückgehenden Beeinträchtigungen reduziert werden und die Abbildungsqualität verbessert werden kann.

Für eine objektunabhängige Kalibrationsbildzeile kann durch die Beleuchtungseinrichtung ein vorgegebenes Kalibrationsleuchtmuster erzeugt werden, welches mit der Zeilenkamera aufgenommen wird. Das für die Kalibration verwendete Kalibrationsleuchtmuster kann beispielsweise eine homogene Ausleuchtung der Zeilenkamera, eine vollständige Abdunkelung der Zeilenkamera oder aber eine regelmäßige Abfolge von hellen und dunklen Leuchtstreifen aufweisen, die mit der Zeilenkamera aufgenommen und abgebildet werden.

Vorzugsweise ist optional vorgesehen, dass die mindestens eine Kalibrationsbeleuchtungskonfiguration eine Dunkelbildbeleuchtung beinhaltet, bei welcher kein Licht mit der Zeilenkamera erfasst und eine Dunkelbildabbildungszeile aufgenommen wird. Zu diesem Zweck können beispielsweise die Aufnahmesequenz in einem abgedunkelten Raum oder Gehäuse durchgeführt werden und bei der Beleuchtungseinrichtung in der Kalibrationsbeleuchtungskonfiguration alle Leuchten ausgeschaltet sein, sodass kein Licht von der Zeilenkamera erfasst werden kann und die aufgenommene Dunkelbildabbildungszeile ausschließlich das Dunkelstromrauschen der einzelnen Sensorpixel erfasst. Es kann auch alternativ oder zusätzlich zu der Abdunklung der Beleuchtungseinrichtung vorgesehen sein, dass die Lichteintrittsöffnung der Zeilenkamera lichtdicht mit einer verlagerbaren Abdeckung abgedeckt wird.

Eine Dunkelbildabbildungszeile, die während der Dunkelbildbeleuchtung mit der Zeilenkamera erfasst wird, ermöglicht es, für jeden Sensorpixel einen Dunkelstrompixelwert zu ermitteln. Der Dunkelstrompixelwert kann beispielsweise dem betreffenden Sensorpixelwert dieser Dunkelbildabbildungszeile entsprechen, die innerhalb einer Beleuchtungssequenz während der Dunkelbildbeleuchtung aufgenommen wird. Es ist ebenfalls möglich, aus mehreren aufeinanderfolgenden Aufnahmen einer Dunkelbildabbildungszeile für jeden Sensorpixel einen Mittelwert oder einen Erwartungswert für den betreffenden Dunkelstrompixelwert zu ermitteln.

Für eine einfache Kalibration der Zeilenkamera können die mit den verschiedenen Beleuchtungskonfigurationen aufgenommenen Abbildungszeilen jeweils durch das Abziehen einer Dunkelbildkorrekturzeile korrigiert werden, wobei die Dunkelbildkorrekturzeile für jeden Sensorpixel den ausgehend von der Dunkelbildbeleuchtung ermittelten Dunkelstrompixelwert aufweist.

Weiterhin ist vorzugsweise optional vorgesehen, dass die mindestens eine Kalibrationsbeleuchtungskonfiguration eine Hellbildbeleuchtung beinhaltet, bei welcher ein homogener Lichtintensitätswert mit der Zeilenkamera erfasst und eine Hellbildabbildungszeile aufgenommen wird. Da jeder Sensorpixel eine unterschiedliche Lichtempfindlichkeit aufweisen kann unterscheiden sich die während einer Hellbildbeleuchtung erfassten Sensorpixelwerte der einzelnen Sensorpixel einer Zeilenkamera erfahrungsgemäß voneinander, obwohl die Hellbildbeleuchtung für jeden Sensorpixel der Zeilenkamera gleich ist und deshalb identische Sensorpixelwerte in einer Hellbildabbildungszeile erzeugen sollte.

Ausgehend von einer Hellbildabbildungszeile kann wie bei der Dunkelbildabbildungszeile für jeden Sensorpixel ein Hellbildkorrekturzeile mit Hellbildpixelwerten ermittelt werden, die ein Maß für die Lichtempfindlichkeit des betreffenden Sensorpixels darstellen können und dazu verwendet werden können, die Auswirkungen der unterschiedlichen Lichtempfindlichkeiten der einzelnen Sensorpixel auf die einzelnen Abbildungen zu reduzieren, die während einer Aufnahmesequenz für die verschiedenen Beleuchtungskonfigurationen aufgenommen und anschließend zusammengefügt werden.

Als besonders vorteilhaft wird es erachtet, dass optional innerhalb einer Beleuchtungssequenz sowohl eine Dunkelbildbeleuchtung als auch eine Hellbildbeleuchtung vorgegeben und sowohl eine Dunkelbildabbildungszeile als auch eine Hellbildabbildungszeile aufgenommen werden. Auf diese Weise ist es für jede einzelne Beleuchtungssequenz möglich, eine Kalibration der Zeilenkamera mit einer Dunkelbildkorrektur und mit einer Hellbildkorrektur durchzuführen, wobei die jeweils aktuellen Informationen der Dunkelbildabbildungszeile und der Hellbildabbildungszeile für die Kalibration berücksichtigt werden und für die Korrekturen verwendet werden.

Es können auch komplexe Leuchtmuster mit einer Kalibrationsleuchteinrichtung erzeugt und als Kalibrationsbeleuchtungskonfiguration vorgegeben werden. Zudem sind viele Zeilenkameras mehrkanalig ausgestaltet, wobei die einzelne Kanäle der Zeilenkamera für verschiedene Wellenlängenbereiche des Lichts eine unterschiedliche Empfindlichkeit aufweisen und bei jeder Aufnahme einer Abbildungszeile für jeden Kanal gesondert eine Abbildungskanalzeile aufgenommen wird. Ausgehend von den einzelnen Messwerten der einzelnen Abbildungskanalzeilen werden von den Zeilenkameras üblicherweise die Sensorwerte für eine Abbildungszeile ermittelt beziehungsweise berechnet. Die Kalibration sowie einzelne Korrekturen können wahlweise für die sich ergebenden Sensorwerte einer Abbildungszeile oder aber für jede Abbildungskanalzeile gesondert durchgeführt werden.

Gemäß einer besonders vorteilhaften Ausgestaltung des Erfindungsgedankens ist vorgesehen, dass mehrere aufeinanderfolgend aufgenommene gleichartige Kalibrationsbildzeilen gemittelt und eine gemittelte Kalibrationsbildzeile für die Kalibration der einzelnen Abbildungszeilen innerhalb der betreffenden Beleuchtungssequenz verwendet wird. Durch eine derartige Mittelung der einzelnen Messwerte kann der Einfluss extremer Messwerte reduziert werden, der sich oftmals nachteilig auf die Abbildungsqualität auswirkt. Es kann auch vorgesehen sein, dass mehrere aufeinanderfolgend aufgenommene gleichartige Kalibrationsbildzeilen ausgewertet und mit Hilfe weiterer Annahmen oder Informationen Erwartungswerte für die einzelnen Sensorpixelwerte einer Kalibrationsbildzeile ermittelt und verwendet werden. So könnte beispielsweise unter der Annahme eines normalverteilten Dunkelstromrauschens eines Sensorpixels aus einer Anzahl von Dunkelstromsensorwerten des betreffenden Sensorpixels, die in aufeinanderfolgenden Dunkelbildabbildungszeilen erfasst wurden, ein Erwartungswert für das Dunkelstromrauschen des betreffenden Sensorpixels ermittelt und für die Korrekturen der Abbildungszeilen verwendet werden, die mit anderen Beleuchtungskonfigurationen innerhalb einer Beleuchtungssequenz aufgenommen werden.

Dabei kann vorgesehen sein, dass mehrere in aufeinanderfolgenden Wiederholungen einer Beleuchtungssequenz aufgenommene Kalibrationsbildzeilen gemittelt werden. Wenn beispielsweise nur ein oder zwei Kalibrationsbildzeilen innerhalb einer Beleuchtungssequenz mit mehreren Beleuchtungskonfigurationen zusätzlich zu den Aufnahmen der Abbildungszeilen mit den betreffenden Beleuchtungskonfigurationen aufgenommen werden, wird die Gesamtdauer für die Aufnahme aller Abbildungszeilen nicht nennenswert verlängert, sodass eine große Anzahl von Beleuchtungssequenzen innerhalb einer vorgegebenen Zeitspanne aufgenommen werden können. Dadurch können entweder räumlich sehr hoch aufgelöste Abbildungen mit den jeweiligen Beleuchtungskonfigurationen erzeugt werden, oder aber die relative Verlagerung der Zeilenkamera und des Objekts mit hoher Geschwindigkeit durchgeführt werden, sodass die insgesamt für die Aufnahme und Erzeugung der Abbildungen benötigte Verfahrensdauer reduziert werden kann.

Es kann ebenfalls optional vorgesehen sein, dass mehrere innerhalb einer Beleuchtungssequenz aufgenommene Kalibrationsbildzeilen gemittelt werden. Die mehreren Kalibrationsbildzeilen können dabei entweder unmittelbar aufeinanderfolgend aufgenommen werden, oder aber beispielsweise jeweils im Wechsel Kalibrationsbildzeilen mit einer Aufnahme einer Aufnahmezeile mit einer der mehreren Beleuchtungskonfigurationen innerhalb der Beleuchtungssequenz aufgenommen werden. So könnte beispielsweise nach jeder Beleuchtungskonfiguration eine Kalibrationsbeleuchtungskonfiguration vorgesehen sein. Auf diese Weise können sehr aktuelle Informationen für die Korrekturen der einzelnen Abbildungszeilen verwendet werden, die für die Kalibration der Zeilenkamera erforderlich sind. Die Kalibration der Zeilenkamera kann für jede Beleuchtungssequenz innerhalb einer Aufnahme ausschließlich auf der Grundlage der innerhalb dieser Beleuchtungssequenz aufgenommenen Kalibrationsbildzeilen vorgenommen werden.

Die Erfindung betrifft auch eine Vorrichtung zur Aufnahme mehrerer Abbildungen eines Objekts mit unterschiedlichen Beleuchtungskonfigurationen, wobei die Vorrichtung eine Aufnahmeeinrichtung für das Objekt und eine Zeilenkamera aufweist, mit welcher in einem Aufnahmetakt Abbildungszeilen eines Objektstreifens aufgenommen werden können, wobei die Aufnahmeeinrichtung und die Zeilenkamera relativ zueinander entlang einer Aufnahmetrajektorie verlagerbar sind, sodass aus einer Anzahl von Abbildungszeilen einzelner Objektstreifen eine lückenlose Abbildung des Objekts zusammengesetzt werden kann, und wobei die Vorrichtung eine Beleuchtungseinrichtung aufweist, mit welcher mindestens zwei verschiedene Beleuchtungskonfigurationen vorgebbar sind, mit denen das Objekt beleuchtbar ist, während mit der Zeilenkamera eine Abbildungszeile aufgenommen wird. Die Beleuchtungseinrichtung kann beispielsweise zwei oder mehr zeilenförmige Leuchteinrichtungen mit jeweils einer dimmbaren oder mit einer hohen Frequenz schaltbaren LED-Zeile aufweisen. Die Leuchteinrichtungen können relativ zu dem Objekt verlagerbar sowie gegebenenfalls auch schwenkbar angeordnet sein. Die relative Verlagerung des Objekts und der Zeilenkamera kann durch eine zumindest linear und gegebenenfalls in einer Ebene verlagerbare Aufnahmeeinrichtung und insbesondere durch einen verlagerbaren Aufnahmetisch in Kombination mit einer ortsfest angeordneten Zeilenkamera bewirkt werden. Auch die Beleuchtungseinrichtung kann insgesamt verlagerbar, aber vorzugsweise ebenso wie die Zeilenkamera ortsfest angeordnet sein.

Erfindungsgemäß ist vorgesehen, dass mit der Beleuchtungseinrichtung mindestens eine Kalibrationsbeleuchtungskonfiguration vorgebbar ist, mit welcher in einem Aufnahmetakt eine objektunabhängige Kalibrationsbildzeile aufnehmbar ist. Dabei kann es sich beispielsweise um eine Dunkelfeldbeleuchtung oder um eine Hellfeldbeleuchtung handeln, mit denen jeweils eine vollständig homogene und von dem jeweiligen Objekt unabhängige Ausleuchtung bzw. Abdunkelung der Zeilenkamera bewirkt wird. Es ist ebenfalls möglich, für eine objektunabhängige Kalibrationsbildzeile ein durch die Beleuchtungseinrichtung vorgegebenes Kalibrationsleuchtmuster zu erzeugen, welches mit der Zeilenkamera aufgenommen wird. Das für die Kalibration verwendete Kalibrationsleuchtmuster kann beispielsweise eine regelmäßige Abfolge von hellen und dunklen Leuchtstreifen aufweisen. Das Kalibrationsleuchtmuster bzw. die Kalibrationsbeleuchtungskonfiguration kann auch eine homogene Ausleuchtung der Zeilenkamera oder eine vollständige Abdunkelung der Zeilenkamera vorgeben. Durch eine derartige Ausgestaltung der Vorrichtung können in einem einzigen Aufnahmevorgang mit einer gleichmäßigen Verlagerung der Zeilenkamera relativ zu dem Objekt alle Abbildungen mit den verschiedenen Beleuchtungskonfigurationen aufgenommen werden und gleichzeitig eine Kalibration der Aufnahmen der Zeilenkamera mit der Beleuchtungseinrichtung durchgeführt werden. Ein gesondert durchzuführendes Kalibrationsverfahren ist ebenso wenig erforderlich wie eine zusätzliche Verlagerung der Zeilenkamera relativ zu dem Objekt, die nicht für die Aufnahme der Abbildungszeilen mit den verschiedenen Beleuchtungskonfigurationen erforderlich ist. Da keine Umrüstung der Vorrichtung für die Durchführung eines Kalibrationsvorgangs erforderlich ist und die für die Kalibration erforderlichen Aufnahmen der Kalibrationsbildzeilen mit derselben relativen Positionierung und Ausrichtung der Zeilenkamera relativ zu dem Objekt aufgenommen werden können, kann auch mit geringem Aufwand eine besonders präzise Kalibration der Zeilenkamera erfolgen.

Gemäß einer vorteilhaften Ausgestaltung des Erfindungsgedankens ist vorgesehen, dass für eine Kalibrationsbeleuchtungskonfiguration eine vollständige Verdunkelung des Objekts oder eine Abdeckung der Zeilenkamera vorgebbar ist. Die Abdeckung der Zeilenkamera kann beispielsweise durch eine linear verlagerbare oder verschwenkbare streifenförmige Objektivabdeckung bewirkt werden. Es ist ebenfalls möglich, dass die Vorrichtung in einer lichtdichten Umhüllung oder in einem vollständig abgedunkelten Raum betrieben wird und die Verdunkelung des Objekts durch ein vollständiges Abschalten der Beleuchtungseinrichtung bewirkt wird.

Einer besonders vorteilhaften Ausgestaltung des Erfindungsgedankens zufolge ist vorgesehen, dass die Beleuchtungseinrichtung für eine Kalibrationsbeleuchtungskonfiguration eine an die Zeilenkamera angepasste Kalibrationsleuchteinrichtung aufweist, mit welcher homogenes und auf die Zeilenkamera gerichtetes Licht erzeugbar ist. Die Kalibrationsleuchteinrichtung kann beispielsweise ebenso wie eine zeilenförmige Leuchteinrichtung für eine Beleuchtungskonfiguration ausgestaltet sein und eine zeilenförmige Anordnung von LEDs aufweisen. Um eine möglichst homogene Lichtabstrahlung zu ermöglichen kann die Kalibrationsleuchteinrichtung eine zwischen den einzelnen Leuchtmitteln wie beispielsweise den LEDs und der Zeilenkamera angeordnete Diffusoreinrichtung aufweisen. Um zusätzlich das von der Kalibrationsleuchteinrichtung abgestrahlte Licht gezielt auf die Zeilenkamera richten zu können kann die Kalibrationsleuchteinrichtung auch eine Linse oder eine Linsenanordnung oder eine geeignete optische Lichtfokussiereinrichtung aufweisen, mit welcher das von den Leuchtmitteln der Kalibrationseinrichtung abgestrahlte Licht in Richtung der Zeilenkamera gebündelt oder gerichtet werden kann. Auch die anderen Leuchteinrichtungen der Beleuchtungseinrichtung können zusätzliche optische Komponenten wie beispielsweise Diffusoreinrichtungen, Linsen oder andere geeignete optische Lichtfokussiereinrichtungen aufweisen, mit welchen das von den Leuchtmitteln abgestrahlte Licht direkt oder indirekt auf das Objekt gerichtet werden kann.

Die Kalibrierungsleuchteinrichtung sollte die Zeilenkamera möglichst homogen ausleuchten. Auch eine nicht vollständig homogene Ausleuchtung kann für eine Kalibration verwendet werden, solange die Ausleuchtung zeitlich konstant ist. In diesem Fall kann die räumlich unterschiedliche Intensität der Ausleuchtung beziehungsweise die Abweichung der Kalibrierungsleuchteinrichtung von einer homogenen Ausleuchtung vermessen und bei der Korrektur berücksichtigt werden.

Es ist ebenfalls denkbar, dass eine Leuchteinrichtung, die für eine vorgebbare Beleuchtungskonfiguration verwendet wird, während eines anderen Aufnahmetakts als Kalibrationsleuchteinrichtung für eine vorgegebene Kalilbrationsbeleuchtungskonfiguration verwendet wird. Die betreffende Leuchteinrichtung kann beispielsweise schwenkbar oder rotierend gelagert sein und abwechselnd in Richtung des Objekts oder in Richtung der Zeilenkamera gerichtet Licht abstrahlen.

Vorzugsweise ist optional vorgesehen, dass die Kalibrationsleuchteinrichtung einen zeilenförmigen Leuchtstreifen aufweist, mit welchem ein an die Zeilenkamera angepasster und auf die Zeilenkamera gerichteter Lichtstreifen aus diffusem Licht erzeugbar ist. Mit einer derartigen gesonderten Kalibrationsleuchteinrichtung kann ohne mechanische Verlagerungsvorgänge während der einzelnen Aufnahmetakte die gewünschte Kalibrationsbeleuchtungskonfiguration vorgegeben werden. Durch den zeilenförmigen Leuchtstreifen sowie die gerichtete Beleuchtung der Zeilenkamera mit diffusem Licht kann eine intensive homogene Beleuchtung der Zeilenkamera bewirkt werden, ohne dass durch unabsichtlich abgestrahltes Streulicht eine nachteilige Beeinträchtigung der Kalibration befürchtet werden müsste.

In besonders vorteilhafter Weise ist optional vorgesehen, dass die Vorrichtung so ausgestaltet und eingerichtet ist, dass mit der Vorrichtung das vorangehend beschriebene Verfahren gegebenenfalls mit einigen oder allen optionalen Verfahrensschritten durchgeführt werden kann.

Nachfolgend wird ein exemplarisches Ausführungsbeispiel des Erfindungsgedankens näher erläutert, welches in den Abbildungen schematisch dargestellt ist. Es zeigt:
Figur 1 eine schematische perspektivische Ansicht einer Vorrichtung zur Aufnahme mehrerer Abbildungen eines Objekts mit unterschiedlichen Beleuchtungskonfigurationen, und
Figur 2 eine schematische Schnittansicht der in Figur 1 gezeigten Vorrichtung.

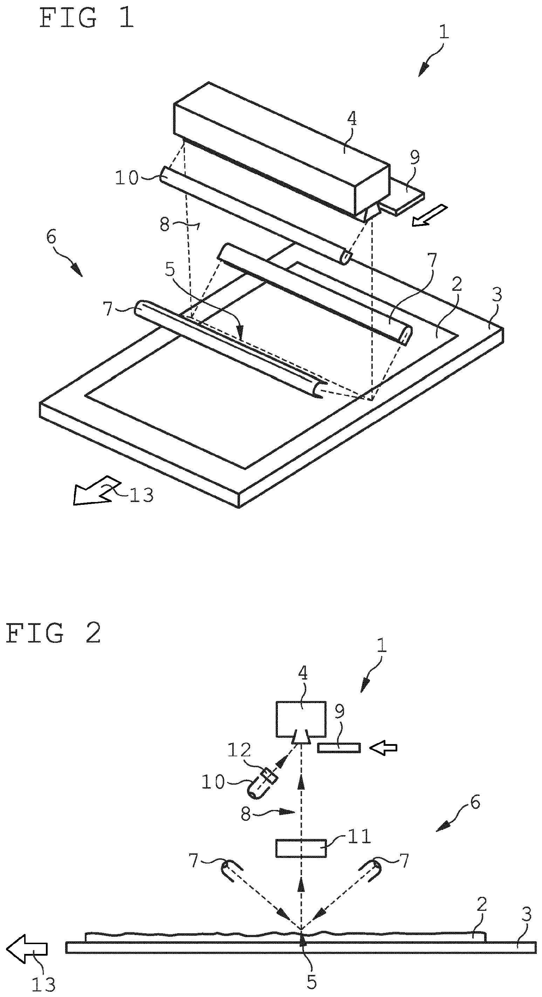

Eine in den Figuren 1 und 2 gezeigte Vorrichtung 1 zur Aufnahme mehrerer Abbildungen eines Objekts 2 mit unterschiedlichen Beleuchtungskonfigurationen weist eine Aufnahmeeinrichtung 3 für das Objekt 2 und eine Zeilenkamera 4 auf. Die Aufnahmeeinrichtung 3 ist beispielsweise ein zumindest linear und gegebenenfalls innerhalb einer Ebene in zwei Richtungen verlagerbarer Tisch oder eine auf Schienen verlagerbare Auflageplatte, auf welcher das Objekt 2 angeordnet und festgelegt werden kann. Das Objekt 2 kann beispielsweise ein Gemälde oder eine Buchseite sein, oder aber auch eine dreidimensionale Formgebung aufweisen. Die relative Verlagerung der Zeilenkamera 4 und des Objekts 2 wird zweckmäßigerweise durch eine Verlagerung der Aufnahmeeinrichtung 3 entlang einer vorgegebenen Aufnahmetrajektorie bewirkt, während die Zeilenkamera 4 ortsfest angeordnet ist. Mit der Zeilenkamera 4 können in einem Aufnahmetakt beispielsweise mit einer Frequenz von 10 kHz Abbildungszeilen eines Objektstreifens des relativ zu der Zeilenkamera 4 bewegten Objekts 2 aufgenommen werden. Der Aufnahmetakt und die Verlagerungsgeschwindigkeit sind so vorgegeben, dass aus einer Anzahl von nacheinander aufgenommenen Abbildungszeilen einzelner in Figur 1 gestrichelt dargestellter Objektstreifen 5 eine lückenlose Abbildung des Objekts 2 mit einer vorgegebenen räumlichen Auflösung zusammengesetzt werden kann.

Die Vorrichtung 1 weist eine Beleuchtungseinrichtung 6 auf, mit welcher mindestens zwei verschiedene Beleuchtungskonfigurationen vorgebbar sind, mit denen das Objekt 2 beleuchtbar ist, während mit der Zeilenkamera 4 eine Abbildungszeile aufgenommen wird. Die Beleuchtungseinrichtung 6 weist zu diesem Zweck beispielsweise zwei zeilenförmige Leuchteinrichtungen 7 mit einer Anzahl von zeilenförmig angeordneten LEDs auf. Die Leuchteinrichtungen 7 sind relativ zu der Zeilenkamera 4 so angeordnet, dass sie parallel zu der Ausrichtung der Zeilenkamera 4 ausgerichtet sind und beabstandet von einer Abbildungsprojektionsebene 8 angeordnet sind, welche von der Zeilenkamera 4 und dem Objektstreifen 5 des Objekts 2 aufgespannt wird. Die Leuchteinrichtungen 7 können gegebenenfalls relativ zu der Zeilenkamera 4 verlagert oder verschwenkt oder verlagert und verschwenkt werden, sodass ein während eines Betriebs einer Leuchteinrichtung 7 abgestrahltes Licht aus unterschiedlichen Richtungen auf den Objektstreifen 5 fällt und den Objektstreifen 5 während der Aufnahme einer Abbildungszeile mit der Zeilenkamera 4 beleuchtet. Die Leuchteinrichtungen 7 können synchron zu dem Aufnahmetakt der Zeilenkamera 4 an- und abgeschaltet werden sowie hinsichtlich ihrer Leuchtintensität variabel gedimmt und hinsichtlich ihrer Ausrichtung verschwenkt werden, sodass auf diese Weise mehrere unterschiedliche Beleuchtungskonfigurationen vorgegeben werden können. Eine Beleuchtungssequenz weist eine Anzahl vorgegebener unterschiedlicher Beleuchtungskonfigurationen auf, mit welchen der Objektstreifen 5 des Objekts 2 für die Dauer eines Aufnahmetakts beleuchtet wird. In den Figuren 1 und 2 sind die von den Leuchteinrichtungen 7 während des Betriebs der Leuchteinrichtungen 7 abgestrahlten Lichtstreifen mit gestrichelten Linien angedeutet.

Während eines Aufnahmeschritts wird das Objekt 2 relativ zu der Zeilenkamera 4 verlagert, und es werden kontinuierlich in aufeinanderfolgenden Aufnahmetakten die unterschiedlichen Beleuchtungskonfigurationen vorgegeben und Aufnahmezeilen von dem jeweils unterschiedlich beleuchteten Objektstreifen 5 aufgenommen. Sobald alle Beleuchtungskonfigurationen einer Beleuchtungssequenz nacheinander vorgegeben und entsprechende Aufnahmen gemacht wurden, wird die Beleuchtungssequenz wiederholt und es werden erneut Aufnahmen mit den verschiedenen Beleuchtungskonfigurationen aufgenommen. Dies wird solange wiederholt, bis das Objekt 2 vollständig entlang der Aufnahmetrajektorie an der Zeilenkamera 4 vorbeibewegt wurde und in jeder Beleuchtungskonfiguration eine ausreichend große Anzahl von Abbildungszeilen der über das Objekt 2 wandernden Objektstreifen 5 aufgenommen wurden, sodass für jede Beleuchtungskonfiguration die einzelnen Abbildungszeilen zu einer lückenlosen Abbildung des Objekts 2 mit derselben Beleuchtungskonfiguration zusammengesetzt werden können.

Die Beleuchtungseinrichtung 6 ist so ausgestaltet und eingerichtet, dass mit der Beleuchtungseinrichtung 6 mindestens eine Kalibrationsbeleuchtungskonfiguration vorgebbar ist, mit welcher in einem Aufnahmetakt eine Kalibrationsbeleuchtung erzeugt wird und eine objektunabhängige Kalibrationsbildzeile aufgenommen werden kann. Eine Kalibrationsbeleuchtungskonfiguration kann beispielsweise durch das gleichzeitige Abschalten aller Leuchteinrichtungen 7 vorgegeben werden, sodass kein Licht auf den Objektstreifen 5 fällt und die Zeilenkamera 4 ein Dunkelbild aufnimmt.

Um die Zeilenkamera 4 während der Aufnahme einer Kalibrationsbildzeile vollständig abzuschatten kann vorgesehen sein, dass eine streifenförmige Objektivabdeckung 9 seitlich neben der Zeilenkamera 4 so angeordnet ist, dass die Objektivabdeckung 9 während einer vorgegebenen Kalibrationsbeleuchtungskonfiguration vor die Zeilenkamera 4 verlagert wird und die Zeilenkamera 4 lichtdicht abdeckt, sodass kein Licht in die Zeilenkamera 4 eindringen kann und ausgehend von einer derart vorgegebenen Dunkelbildbeleuchtung eine Dunkelbildkorrekturzeile mit der Zeilenkamera 4 aufgenommen werden kann.

Weiterhin kann eine ebenfalls zeilenförmige Kalibrationsleuchteinrichtung 10 vorgesehen sein, die in der Nähe der Zeilenkamera 4 so angeordnet ist, dass mit der Kalibrationsleuchteinrichtung 10 ein zeilenförmiger Leuchtstreifen so auf die Zeilenkamera 4 gerichtet werden kann, dass die Zeilenkamera 4 objektunabhängig homogen beleuchtet wird und ausgehend von einer derart vorgegebenen Hellbildbeleuchtung eine Hellbildkorrekturzeile aufgenommen werden kann. Sowohl die Dunkelbildkorrekturzeile als auch die Hellbildkorrekturzeile können zur Kalibration der Zeilenkamera 4 und zu einer Korrektur der einzelnen Abbildungszeilen verwendet werden, die mit den unterschiedlichen Beleuchtungskonfigurationen der Beleuchtungseinrichtung 6 aufgenommen werden.

Zwischen dem Objektstreifen 5 und der Zeilenkamera 4 kann eine optische Abbildungseinrichtung 11 angeordnet sein, um den Objektstreifen 5 auf eine Sensorfläche der Zeilenkamera 4 abzubilden. Zwischen der Kalibrationsleuchteinrichtung 10 und der Zeilenkamera 4 kann eine Diffusorlinse 12 angeordnet sein, mit welcher das von der Kalibrationsleuchteinrichtung 10 abgestrahlte Licht diffus auf die Zeilenkamera 4 gerichtet werden kann.

Innerhalb einer Beleuchtungssequenz können wahlweise eine oder mehrere verschiedene Kalibrationsbeleuchtungskonfigurationen jeweils einfach oder mehrfach vorgegeben werden, mit welchen zusätzlich zu den Abbildungszeilen in den verschiedenen Beleuchtungskonfigurationen für die verschiedenen Aufnahmen des Objekts 2 weitere Konfigurationsbildzeilen aufgenommen werden, die für eine Kalibration der Zeilenkamera 4 und eine entsprechende Korrektur der mit den Beleuchtungskonfigurationen aufgenommenen Abbildungszeilen verwendet werden können.

Auf diese Weise können während eines Aufnahmeschritts und während einer einzigen Verlagerung des Objekts 2 mit der Aufnahmeeinrichtung 3 entlang der in den Figuren 1 und 2 mit einem großen Pfeil 13 angedeuteten Aufnahmetrajektorie alle Abbildungszeilen für die verschiedenen Abbildungen des Objekts 2 mit unterschiedlichen Beleuchtungskonfigurationen sowie alle für die gegebenenfalls kontinuierlich durchgeführte Kalibration der Zeilenkamera 4 erforderlichen Kalibrationsbildzeilen aufgenommen werden. Eine gesonderte Kalibration vor Beginn der Verlagerung des Objekts 2 entlang der Aufnahmetrajektorie und der Aufnahmen für die einzelnen Abbildungen ist nicht erforderlich.

## Patentansprüche

1. Verfahren zur Aufnahme mehrerer Abbildungen eines Objekts (2) mit unterschiedlichen Beleuchtungskonfigurationen, wobei das Objekt (2) und eine Zeilenkamera (4) relativ zueinander entlang einer Aufnahmetrajektorie verlagert werden, wobei während eines Aufnahmeschritts mit einer Beleuchtungseinrichtung (6) in aufeinanderfolgenden Aufnahmetakten aufeinanderfolgende Wiederholungen einer Beleuchtungssequenz mit unterschiedlichen Beleuchtungskonfigurationen vorgegeben werden, wobei mit der Zeilenkamera (4) in jedem Aufnahmetakt jeweils eine Abbildungszeile eines Objektstreifens (5) aufgenommen wird, und wobei der Aufnahmetakt in Abhängigkeit von einer relativen Verlagerungsgeschwindigkeit entlang der Aufnahmetrajektorie und der Anzahl unterschiedlicher Beleuchtungskonfigurationen in der Beleuchtungssequenz ausreichend kurz ist, sodass in einem Abbildungserzeugungsschritt für jede einzelne Beleuchtungskonfiguration der Beleuchtungssequenz die mit dieser Beleuchtungskonfiguration nacheinander aufgenommenen Abbildungszeilen der Objektstreifen (5) zu einer lückenlosen Abbildung des Objekts (2) mit der betreffenden Beleuchtungskonfiguration zusammengesetzt werden können, **dadurch gekennzeichnet, dass** mindestens eine Kalibrationsbeleuchtungskonfiguration innerhalb der Beleuchtungssequenz vorgegeben wird, mit welcher in einem Aufnahmetakt eine objektunabhängige Kalibrationsbildzeile aufgenommen wird, und dass die aufgenommene Kalibrationsbildzeile für eine Kalibration der einzelnen Abbildungszeilen innerhalb der betreffenden Beleuchtungssequenz verwendet wird.

2. Verfahren nach Anspruch 1, **dadurch gekennzeichnet, dass** die mindestens eine Kalibrationsbeleuchtungskonfiguration einer Dunkelbildbeleuchtung entspricht, bei welcher kein Licht mit der Zeilenkamera (4) erfasst und eine Dunkelbildabbildungszeile aufgenommen wird.

3. Verfahren nach Anspruch 1 oder Anspruch zwei, **dadurch gekennzeichnet, dass** die mindestens eine Kalibrationsbeleuchtungskonfiguration einer Hellbildbeleuchtung entspricht, bei welcher ein homogener Lichtintensitätswert mit der Zeilenkamera (4) erfasst und eine Hellbildabbildungszeile aufgenommen wird.

4. Verfahren nach einem der voranstehenden Ansprüche, **dadurch gekennzeichnet, dass** innerhalb einer Beleuchtungssequenz sowohl eine Dunkelbildbeleuchtung als auch eine Hellbildbeleuchtung vorgegeben und sowohl eine Dunkelbildabbildungszeile als auch eine Hellbildabbildungszeile aufgenommen werden.

5. Verfahren nach einem der voranstehenden Ansprüche, **dadurch gekennzeichnet, dass** mehrere aufeinanderfolgend aufgenommene gleichartige Kalibrationsbildzeilen gemittelt und eine gemittelte Kalibrationsbildzeile für die Kalibration der einzelnen Abbildungszeilen innerhalb der betreffenden Beleuchtungssequenz verwendet wird.

6. Verfahren nach Anspruch 5, **dadurch gekennzeichnet, dass** mehrere in aufeinanderfolgenden Wiederholungen einer Beleuchtungssequenz aufgenommene Kalibrationsbildzeilen gemittelt werden.

7. Verfahren nach Anspruch 5 oder Anspruch 6, **dadurch gekennzeichnet, dass** mehrere innerhalb einer Beleuchtungssequenz aufgenommene Kalibrationsbildzeilen gemittelt werden.

8. Vorrichtung (1) zur Aufnahme mehrerer Abbildungen eines Objekts (2) mit unterschiedlichen Beleuchtungskonfigurationen, wobei die Vorrichtung (1) eine Aufnahmeeinrichtung (3) für das Objekt (2) und eine Zeilenkamera (4) aufweist, mit welcher in einem Aufnahmetakt Abbildungszeilen eines Objektstreifens (5) aufgenommen werden können, wobei die Aufnahmeeinrichtung (3) und die Zeilenkamera (4) relativ zueinander entlang einer Aufnahmetrajektorie verlagerbar sind, sodass aus einer Anzahl von Abbildungszeilen einzelner Objektstreifen (5) eine lückenlose Abbildung des Objekts (2) zusammengesetzt werden kann, und wobei die Vorrichtung (1) eine Beleuchtungseinrichtung (6) aufweist, mit welcher in aufeinanderfolgenden Aufnahmetakten aufeinanderfolgende Wiederholungen einer Beleuchtungssequenz mit mindestens zwei verschiedenen Beleuchtungskonfigurationen vorgebbar sind, mit denen das Objekt (2) beleuchtbar ist, während mit der Zeilenkamera (4) in jedem Aufnahmetakt jeweils eine Abbildungszeile aufgenommen wird,
**dadurch gekennzeichnet, dass** die Beleuchtungseinrichtung (6) derart eingerichtet ist, dass mindestens eine Kalibrationsbeleuchtungskonfiguration vorgebbar ist, mit welcher in einem Aufnahmetakt eine objektunabhängige Kalibrationsbildzeile mit der Zeilenkamera (4) aufnehmbar ist, und die Vorrichtung zur Verwendung der aufgenommenen Kalibrationsbildzeile für eine Kalibration der einzelnen Abbildungszeilen innerhalb der betreffenden Beleuchtungssequenz eingerichtet ist.

9. Vorrichtung (1) nach Anspruch 8, **dadurch gekennzeichnet, dass** für eine Kalibrationsbeleuchtungskonfiguration eine vollständige Verdunkelung des Objekts (2) oder eine Abdeckung der Zeilenkamera (4) vorgebbar ist.

10. Vorrichtung (1) nach Anspruch 8 oder Anspruch 9, **dadurch gekennzeichnet, dass** die Beleuchtungseinrichtung (6) für eine Kalibrationsbeleuchtungskonfiguration eine an die Zeilenkamera (4) angepasste Kalibrationsleuchteinrichtung (10) aufweist, mit welcher homogenes und auf die Zeilenkamera (4) gerichtetes Licht erzeugbar ist.

11. Vorrichtung (1) nach Anspruch 10, **dadurch gekennzeichnet, dass** die Kalibrationsleuchteinrichtung (10) einen zeilenförmigen Leuchtstreifen aufweist, mit welchem ein an die Zeilenkamera (4) angepasster und auf die Zeilenkamera (4) gerichteter Lichtstreifen aus diffusem Licht erzeugbar ist.

## Claims

1. Method for recording a plurality of images of an object (2) with different illumination configurations, wherein the object (2) and a line camera (4) are displaced relative to one another along a recording trajectory, wherein, during a recording step, successive repetitions of an illumination sequence with different illumination configurations are specified by means of an illumination device (6) in successive recording cycles, wherein, in each recording cycle, a respective image line of an object strip (5) is recorded by means of the line camera (4), and wherein the recording cycle is sufficiently short as a function of a relative displacement speed along the recording trajectory and the number of different illumination configurations in the illumination sequence such that, in an image-generation step, for each individual illumination configuration of the illumination sequence, the image lines of the object strips (5) recorded successively with this illumination configuration can be assembled to form a gap-free image of the object (2) with the respective illumination configuration, **characterized in that** at least one calibration illumination configuration is specified within the illumination sequence, by means of which an object-independent calibration image line is recorded in a recording cycle, and **in that** the recorded calibration image line is used for a calibration of the individual image lines within the respective illumination sequence.

2. Method according to claim 1, **characterized in that** the at least one calibration illumination configuration corresponds to a dark-image illumination in which no light is detected by the line camera (4) and a dark-image line is recorded.

3. Method according to claim 1 or claim 2, **characterized in that** the at least one calibration illumination configuration corresponds to a bright-image illumination in which a homogeneous light intensity value is detected by the line camera (4) and a bright-image line is recorded.

4. Method according to any one of the preceding claims, **characterized in that**, within an illumination sequence, both a dark-image illumination and a bright-image illumination are specified and both a dark-image line and a bright-image line are recorded.

5. Method according to any one of the preceding claims, **characterized in that** a plurality of successively recorded calibration image lines of the same type are averaged and an averaged calibration image line is used for a calibration of the individual image lines within the respective illumination sequence.

6. Method according to claim 5, **characterized in that** a plurality of calibration image lines recorded in successive repetitions of an illumination sequence are averaged.

7. Method according to claim 5 or claim 6, **characterized in that** a plurality of calibration image lines recorded within an illumination sequence are averaged.

8. Device (1) for recording a plurality of images of an object (2) with different illumination configurations, wherein the device (1) comprises a receiving device (3) for the object (2) and a line camera (4), by means of which image lines of an object strip (5) can be recorded in a recording cycle, wherein the receiving device (3) and the line camera (4) are displaceable relative to one another along a recording trajectory such that a gap-free image of the object (2) can be assembled from a number of image lines of individual object strips (5), and wherein the device (1) comprises an illumination device (6), by means of which, in successive recording cycles, successive repetitions of an illumination sequence with at least two different illumination configurations can be specified, with which the object (2) can be illuminated, while a respective image line is recorded by means of the line camera (4) in each recording cycle, **characterized in that** the illumination device (6) is configured such that at least one calibration illumination configuration can be specified, by means of which an object-independent calibration image line can be recorded by means of the line camera (4) in a recording cycle, and **in that** the device is configured to use the recorded calibration image line for a calibration of the individual image lines within the respective illumination sequence.

9. Device (1) according to claim 8, **characterized in that**, for a calibration illumination configuration, complete darkening of the object (2) or covering of the line camera (4) can be specified.

10. Device (1) according to claim 8 or claim 9, **characterized in that** the illumination device (6), for a calibration illumination configuration, comprises a calibration lighting device (10) adapted to the line camera (4), by means of which homogeneous light directed towards the line camera (4) can be generated.

11. Device (1) according to claim 10, **characterized in that** the calibration lighting device (10) comprises a line-shaped light-emitting strip, by means of which a strip of diffuse light adapted to the line camera (4) and directed towards the line camera (4) can be generated.

## Revendications

1. Procédé d'acquisition d'une pluralité d'images d'un objet (2) avec différentes configurations d'éclairage, dans lequel l'objet (2) et une caméra linéaire (4) sont déplacés l'un par rapport à l'autre le long d'une trajectoire d'acquisition, dans lequel, pendant une étape d'acquisition, des répétitions successives d'une séquence d'éclairage comportant différentes configurations d'éclairage sont définies au moyen d'un dispositif d'éclairage (6) au cours de cycles d'acquisition successifs, dans lequel, à chaque cycle d'acquisition, une ligne d'image respective d'une bande de l'objet (5) est acquise au moyen de la caméra linéaire (4), et dans lequel, en fonction d'une vitesse de déplacement relative le long de la trajectoire d'acquisition et du nombre de configurations d'éclairage différentes dans la séquence d'éclairage, le cycle d'acquisition est suffisamment court pour que, lors d'une étape de génération d'image, pour chaque configuration d'éclairage individuelle de la séquence d'éclairage, les lignes d'image des bandes de l'objet (5) acquises successivement avec cette configuration d'éclairage puissent être assemblées en une image sans lacune de l'objet (2) avec la configuration d'éclairage concernée, **caractérisé en ce qu'**au moins une configuration d'éclairage d'étalonnage est définie au sein de la séquence d'éclairage, au moyen de laquelle une ligne d'image d'étalonnage indépendante de l'objet est acquise au cours d'un cycle d'acquisition, et **en ce que** la ligne d'image d'étalonnage acquise est utilisée pour un étalonnage des lignes d'image individuelles au sein de la séquence d'éclairage concernée.

2. Procédé selon la revendication 1, **caractérisé en ce que** ladite au moins une configuration d'éclairage d'étalonnage correspond à un éclairage d'image sombre, dans lequel aucune lumière n'est détectée par la caméra linéaire (4) et une ligne d'image sombre est acquise.

3. Procédé selon la revendication 1 ou la revendication 2, **caractérisé en ce que** ladite au moins une configuration d'éclairage d'étalonnage correspond à un éclairage d'image claire, dans lequel une valeur homogène d'intensité lumineuse est détectée par la caméra linéaire (4) et une ligne d'image claire est acquise.

4. Procédé selon l'une quelconque des revendications précédentes, **caractérisé en ce que**, au sein d'une séquence d'éclairage, un éclairage d'image sombre ainsi qu'un éclairage d'image claire sont définis, et une ligne d'image sombre ainsi qu'une ligne d'image claire sont acquises.

5. Procédé selon l'une quelconque des revendications précédentes, **caractérisé en ce que** plusieurs lignes d'image d'étalonnage de même type acquises successivement sont moyennées et une ligne d'image d'étalonnage moyennée est utilisée pour un étalonnage des lignes d'image individuelles au sein de la séquence d'éclairage concernée.

6. Procédé selon la revendication 5, **caractérisé en ce que** plusieurs lignes d'image d'étalonnage acquises au cours de répétitions successives d'une séquence d'éclairage sont moyennées.

7. Procédé selon la revendication 5 ou la revendication 6, **caractérisé en ce que** plusieurs lignes d'image d'étalonnage acquises au sein d'une séquence d'éclairage sont moyennées.

8. Dispositif (1) pour l'acquisition d'une pluralité d'images d'un objet (2) avec différentes configurations d'éclairage, dans lequel le dispositif (1) comprend un dispositif de réception (3) pour l'objet (2) et une caméra linéaire (4), au moyen de laquelle des lignes d'image d'une bande de l'objet (5) peuvent être acquises au cours d'un cycle d'acquisition, dans lequel le dispositif de réception (3) et la caméra linéaire (4) sont déplaçables l'un par rapport à l'autre le long d'une trajectoire d'acquisition, de sorte qu'une image sans lacune de l'objet (2) puisse être assemblée à partir d'un nombre de lignes d'image de bandes individuelles de l'objet (5), et dans lequel le dispositif (1) comprend un dispositif d'éclairage (6), au moyen duquel, au cours de cycles d'acquisition successifs, des répétitions successives d'une séquence d'éclairage comportant au moins deux configurations d'éclairage différentes peuvent être définies, avec lesquelles l'objet (2) peut être éclairé, tandis qu'à chaque cycle d'acquisition une ligne d'image respective est acquise au moyen de la caméra linéaire (4), **caractérisé en ce que** le dispositif d'éclairage (6) est configuré de telle sorte qu'au moins une configuration d'éclairage d'étalonnage puisse être définie, au moyen de laquelle une ligne d'image d'étalonnage indépendante de l'objet puisse être acquise au moyen de la caméra linéaire (4) au cours d'un cycle d'acquisition, et **en ce que** le dispositif est configuré pour utiliser la ligne d'image d'étalonnage acquise pour un étalonnage des lignes d'image individuelles au sein de la séquence d'éclairage concernée.

9. Dispositif (1) selon la revendication 8, **caractérisé en ce que**, pour une configuration d'éclairage d'étalonnage, un obscurcissement complet de l'objet (2) ou un recouvrement de la caméra linéaire (4) peut être défini.

10. Dispositif (1) selon la revendication 8 ou la revendication 9, **caractérisé en ce que**, pour une configuration d'éclairage d'étalonnage, le dispositif d'éclairage (6) comprend un dispositif d'éclairage d'étalonnage (10) adapté à la caméra linéaire (4), au moyen duquel une lumière homogène dirigée vers la caméra linéaire (4) peut être générée.

11. Dispositif (1) selon la revendication 10, **caractérisé en ce que** le dispositif d'éclairage d'étalonnage (10) comprend une bande émettrice de lumière de forme linéaire, au moyen de laquelle une bande de lumière diffuse adaptée à la caméra linéaire (4) et dirigée vers la caméra linéaire (4) peut être générée.
